# EUROPÄISCHE PATENTSCHRIFT

(11) **EP 1 714 732 B1**
(45) Veröffentlichungstag und Bekanntmachung des Hinweises auf die Patenterteilung: **09.07.2008**
(21) Anmeldenummer: 05008636.2
(22) Anmeldetag: 20.04.2005
(51) Int. Cl.: B23Q 11/00, B01D 46/00

(54) **Staubabsaugeinrichtung zur lösbaren Anbringung an einem Handwerkzeuggerät**
Removable dust suction device for hand tool
Dispositif démontable d'aspiration de poussière pour outil à main

(43) Veröffentlichungstag der Anmeldung: 25.10.2006
(73) Patentinhaber: Metabowerke GmbH, 72622 Nürtingen (DE)
(72) Erfinder: Höschele, Volker, 72636 Frickenhausen (DE); Kukla, Michael, 72669 Unterensingen (DE)
(74) Vertreter: Friz, Oliver

(56) Entgegenhaltungen:
- EP-A- 0 411 240
- DE-A1- 3 501 753
- GB-A- 2 393 143
- US-A- 4 954 255
- US-A- 5 467 835

## Beschreibung

Die Erfindung betrifft eine Staubabsaugeinrichtung zur lösbaren Anbringung an einem motorischen Handwerkzeuggerät, mit einem einen Ankopplungsbereich an das Handwerkzeuggerät aufweisenden Gehäusekörper, mit einer Gebläseeinrichtung, mit einer Staubführungseinrichtung, um Staub in einem Saugluftstrom von einer Werkzeugansetzstelle zu einer Staubsammeleinrichtung mit einem Filter zu führen, wobei der Saugluftstrom durch die Staubsammeleinrichtung hindurch zu dem Gebläse gesogen wird, wobei der Filter einen Filterinnenraum bildet und die Staubführungseinrichtung in diesen Filterinnenraum mündet und wobei der Filter in einer Filteraufnahmekammer des Gehäusekörpers angeordnet und in die Filteraufnahmekammer einsetzbar bzw. aus dieser entnehmbar ist, und der Filter (20) eine im wesentlichen starre Ummantelung (30) mit einem freien Strömungsquerschnitt von wenigstens 20 % aufweist.

Staubabsaugeinrichtungen der vorstehend genannten Art sind beispielsweise in US 5 467 835, EP 1 457 288 A1, EP 1 459 841 A1, EP 1 459 842 A1 oder DE 101 15 116 A1 beschrieben. Eine teleskopierbare Staubführungseinrichtung bei diesen bekannten Staubabsaugeinrichtungen mündet in eine Filteraufnahmekammer, in der ein Filterkörper vor einer Ansaugöffnung einer Gebläseeinrichtung angeordnet ist. In dem Saugluftstrom mitgeführter Staub und Schmutz sammelt sich außerhalb und innerhalb des Filterkörpers. Wenn die Filteraufnahmekammer zu Reinigungszwecken geöffnet wird, schlägt dem Benutzer Schmutz und Staub entgegen. Des Weiteren führt auch ein teilweises Zusetzen des Filterkörpers zu einer insgesamt sehr starken Herabsetzung des Strömungsquerschnitts, was die Effektivität der Staubabsaugung beeinträchtigt und auch eine erhöhte Motorbelastung bei der Gebläseeinrichtung zur Folge hat.

Der vorliegenden Erfindung liegt die Aufgabe zugrunde, eine Staubabsaugeinrichtung der gattungsgemäßen Art zu schaffen, die komfortabel zu bedienen ist und insbesondere die vorstehend genannten Nachteile vermeidet.

Diese Aufgabe wird bei einer solchen Staubabsaugeinrichtung erfindungsgemäß dadurch gelöst, dass der Filterinnenraum in einer Umfangsrichtung allseits von penetrierbaren Wandungen us Filtermaterial begrenzt ist und dass zwischen den penetrierbaren Wandungen des Filters und die Filteraufnahmekammer begrenzenden Wandungen des Gehäusekörpers ein freier Strömungsquerschnitt außerhalb des Filters und auch außerhalb der Ummantelung des Filters gebildet ist.

Mit der Erfindung wird also vorgeschlagen, die Staubführungseinrichtung in einen abgeschlossenen Filterinnenraum zu leiten, damit von der Werkzeugansetzstelle abgeführter Staub und Schmutz nicht überall in der Filteraufnahmekammer niederschlägt und darüber hinaus andere Bereiche des Gehäusekörpers, die nur schwer abzudichten sind, beaufschlägt. Außerdem kann hierdurch Staub und Schmutz durch einfache Entnahme des gesamten Filters in angenehmer Weise durch den Benutzer entnommen werden.

Dadurch, dass der Filter nicht mit penetrierbaren Wandungen gegen eine Gehäusewandung oder gegen Ansaugöffnungen, die zu der Gebläseeinrichtung führen, anliegt, sondern zwischen dem Filter, d. h. zwischen penetrierbaren Wandungen des Filters und Wandungen der Filteraufnahmekammer ein freier Strömungsquerschnitt ausgebildet ist, ist der Filter gewissermaßen allseitig oder zumindest im Bereich seiner penetrierbaren Filterfläche umströmbar in der Filteraufnahmekammer angeordnet. Auf diese Weise wird einerseits verhindert, dass ein flexibler Filterkörper oder eine biegsame Filtertüte gegen Ansaugöffnungen, die zu der Gebläseeinrichtung führen, angesaugt wird. Andererseits kann stets die gesamte penetrierbare Wandungsfläche des Filtermaterials für den Durchtritt des Saugluftstroms und damit zu Filterzwecken genutzt werden. Auch wenn sich in einem unteren Bereich des Filterinnenraums schon Staub abgesetzt hat, steht die optimale Filterwirkung zumindest durch die übrigen Bereiche des Filters zur Verfügung.

Es hat sich als vorteilhaft erwiesen, wenn der Abstand zwischen penetrierbaren Wandungen des Filters und die Filteraufnahmekammer begrenzenden Wandungen des Gehäusekörpers wenigstens 1 mm, und vorzugsweise wenigstens 2 mm beträgt.

Die penetrierbaren Wandungen des Filters können an sich in beliebiger Weise durch an sich bekanntes und übliches für die vorstehenden Zwecke geeignetes Filtermaterial gebildet sein. Es erweist sich als vorteilhaft, wenn der Filter ein leporelloförmig gefaltetes Filtermaterial umfasst, das häufig auch als Faltenfiltermittel bezeichnet wird. Solchenfalls wird der vorstehend genannte Abstand von den den Wandungen der Filteraufnahmekammer zugewandten Spitzen der Faltungen berechnet.

Es erweist sich in weiterer Ausbildung der Erfindung als vorteilhaft, wenn der Filter eine zylindrische Grundform aufweist, wobei die Mantelfläche die penetrierbare Filterwandung bildet oder eine quaderförmige Grundform aufweist, wobei die langgestreckten Seiten die penetrierbare Filterwandung bilden.

Des Weiteren hat es sich als besonders vorteilhaft erwiesen, wenn die im Wesentlichen starre Ummantelung mit einem freien Strömungsquerschnitt von wenigstens 30 % und vorzugsweise von wenigstens 50 % umfasst. Eine solche Ummantelung kann beispielsweise von einem Gitter oder Drahtgeflecht oder einem Lochblech oder gelochten Kunststoffmaterial gebildet sein. Die Ummantelung soll dem Saugluftstrom einerseits einen geringen Strömungswiderstand entgegensetzen und andererseits eine für die Filteranordnung stabilisierende und formgebende Funktion haben. Sie soll das Filtermaterial schützend umgeben und bei Verwendung von biegsamem oder nachgiebigem Filtermaterial verhindern, dass dieses gegen Anströmöffnungen der Gebläseeinrichtung angesogen wird.

Nach einem weiteren Erfindungsgedanken ist die Ummantelung mit zwei gegenüberliegenden Abschlussstücken montiert, die dann in vorteilhafter Weise ebenfalls eine formgebende oder formstabilisierende Funktion zusammen mit der Ummantelung haben können.

Des Weiteren erweist es sich als vorteilhaft, wenn die Staubführungseinrichtung durch ein solches Abschlussstück in das Filterinnere mündet. Solchenfalls können die Abschlussstücke in vorteilhafter Weise aus einem elastomeren Material gebildet sein, welches auch eine Dichtfunktion in Bezug auf die Einmündung der Staubführungseinrichtung in das Filterinnere ausübt.

Die Abschlussstücke können insbesondere lösbar vorgesehen sein, so dass eine aus Filtermaterial, Ummantelung und Abschlussstücken gebildete Filtereinheit zu Reinigungszwecken zerlegbar ist. Beispielsweise kann nach dem Abnehmen eines Abschlussstücks das Filtermaterial mit dem im Inneren abgeschiedenen Staub und Schmutz auf einfache Weise in ein Abfallbehältnis gegeben und durch Einlegen eines neuen ungebrauchten Filtermaterials ersetzt werden.

Weitere Merkmale, Einzelheiten und Vorteile der Erfindung ergeben sich aus den beigefügten Patentansprüchen und aus der zeichnerischen Darstellung und nachfolgenden Beschreibung von Ausführungsformen der erfindungsgemäßen Staubabsaugeinrichtung.

In der Zeichnung zeigt:
- Figur 1: eine Schnittansicht einer ersten Ausführungsform der erfindungsgemäßen Staubabsaugeinrichtung;
- Figur 2: eine Schnittansicht der Staubabsaugeinrichtung nach Figur 1 mit Schnittebene B-B;
- Figur 3: eine Schnittansicht durch die Filteraufnahmekammer der Staubabsaugeinrichtung mit Schnittebene C-C in Figur 2;
- Figur 4: eine perspektivische und teilweise aufgerissene Ansicht eines Filters der Staubabsaugeinrichtung nach Figur 1;
- Figur 5: eine weitere Ansicht in das Innere des Filters nach Figur 4;
- Figuren 6 bis 9: den Figuren 1 bis 4 entsprechende Ansichten der Staubabsaugeinrichtung mit einem anderen Filter.

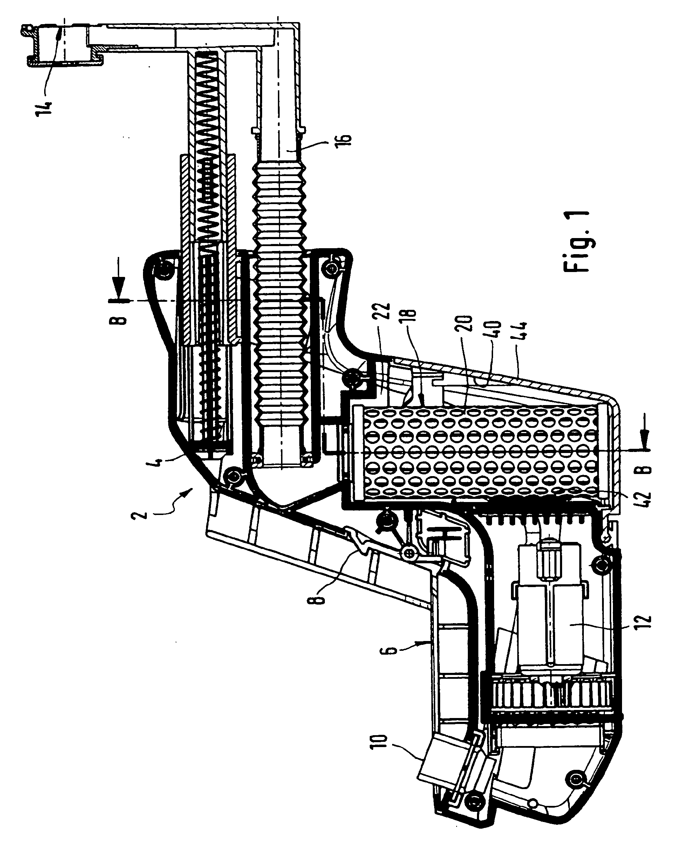

Die Figuren 1 bis 3 zeigen eine Staubabsaugeinrichtung 2, die zur lösbaren Anbringung an einem motorischen Handwerkzeuggerät, etwa eine Bohrmaschine oder ein Bohrhammer, konzipiert ist. Die Staubabsaugeinrichtung 2 umfasst einen Gehäusekörper 4, der einen Ankopplungsbereich 6 mit Befestigungsmitteln 8 zum lösbaren Anbringen der Staubabsaugeinrichtung an einem nicht dargestellten Handwerkzeuggerät umfasst. Beim Ankoppeln findet auch eine elektrische Kopplung zwischen dem Handwerkzeuggerät und der Staubabsaugeinrichtung über eine elektrische Kontaktierungseinrichtung 10 statt.

Die Staubabsaugeinrichtung 2 weist eine elektromotorisch angetriebene Gebläseeinrichtung 12 auf, die einen Saugluftstrom erzeugt, der im Bereich einer Werkzeugansetzstelle 14 entstehenden Bohrstaub über eine teleskopierbare Staubführungseinrichtung 16 zu einer Staubsammeleinrichtung 18 transportiert. Der Saugluftstrom passiert die Staubsammeleinrichtung 18 und wird über die Gebläseeinrichtung 12 nach außen befördert.

Die Staubabsammeleinrichtung 18 ist vorliegend von einem noch näher zu beschreibenden kartuschenartigen Filter 20 gebildet, der in einer Filteraufnahmekammer 22 des Gehäusekörpers 4 aufgenommen ist.

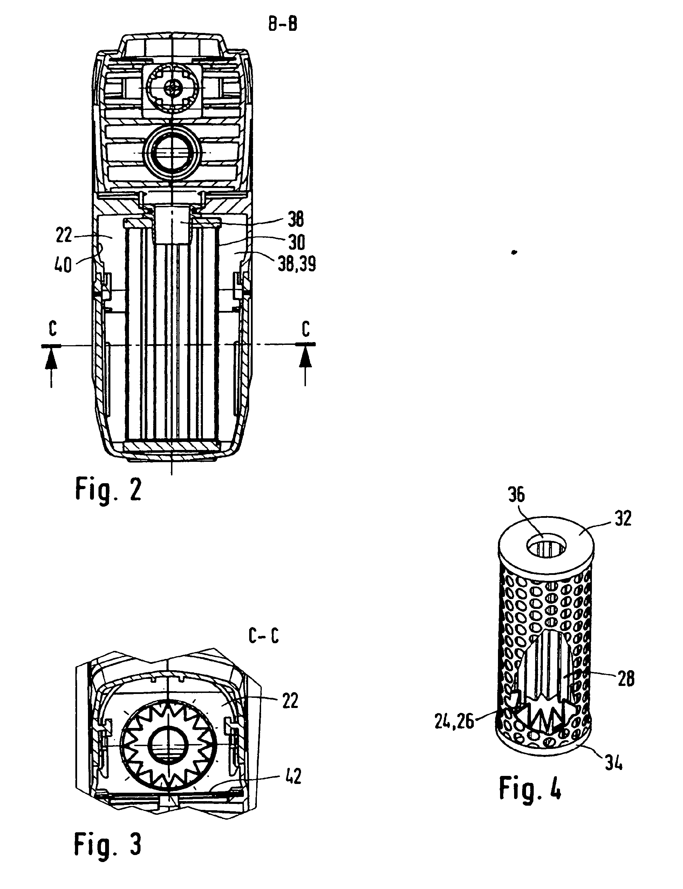

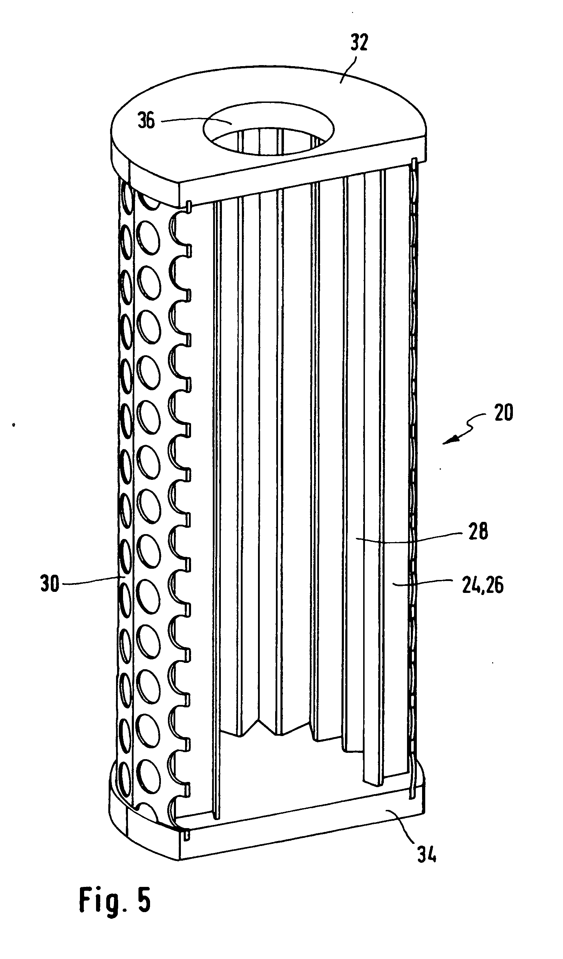

Der Filter 20 umfasst ein leporelloförmig gefaltetes (Figuren 4 und 5) Filtermaterial 24, welches dem Mantel eines Zylinders folgend angeordnet ist. Das Filtermaterial 24 bildet Wandungen 26, die einen allseitig umschlossenen Filterinnenraum 28 begrenzen. In diesen Filterinnenraum 28 mündet die Staubführungseinrichtung 16. Der Saugluftstrom wird also in den Filterinnenraum 28 geleitet, so dass sich darin mitgeführter enthaltener Bohrstaub und Schmutz innerhalb des Filters 20 abscheidet und die Saugluft den Filter 20 bzw. dessen Filtermaterial 24 nach radial außen durchströmt.

Radial außerhalb des leporelloförmig gefalteten Filtermaterials 24 ist eine Ummantelung 30 aus einem vorzugsweise starren oder halbstarren Material vorgesehen, welche das Filtermaterial 24 und die hierdurch gebildeten penetrierbaren Wandungen 26 des Filters 20 im vorliegenden speziellen Fall zylindermantelförmig umgibt. An den freien Enden der Ummantelung 30 ist jeweils ein Abschlussstück 32 bzw. 34 vorgesehen. Das Abschlussstück 32 weist eine Öffnung 36 auf, durch welche ein Stutzen 37 der Staubführungseinrichtung 16 in den Filterinnenraum 28 mündet. Das Filtermaterial 24, die Ummantelung 30 und die beiden Abschlussstücke 32, 34 bilden den Filter 20, der als solcher in die Filteraufnahmekammer 22 einsetzbar bzw. aus dieser entnehmbar ist.

Der Filter 20 ist in der Filteraufnahmekammer 22 nun so angeordnet, dass außerhalb der penetrierbaren Wandungen 26 des Filters 20 und auch außerhalb der Ummantelung 30 des Filters 20 ein durchströmbarer Raum 38, der einen freien Strömungsquerschnitt 39 bildet, gegeben ist. Es ist also ein Abstand zwischen den penetrierbaren Wandungen 26 des Filters 20 und Wandungen 40 des Gehäusekörpers 4, welche die Filteraufnahmekammer 22 begrenzen oder bilden vorgesehen. Dieser Abstande soll einen freien Strömungsquerschnitt für den durch den Filter hindurchtretenden Saugluftstrom bilden, so dass der Filter 20 möglichst allseits umströmbar in der Filteraufnahmekammer 22 vorgesehen ist und insbesondere nicht die Gefahr besteht, dass sich Filtermaterial gegen Ansaugöffnungen 42, die zu der Gebläseeinrichtung 12 führen, anlegt und den Strömungswiderstand erhöht und die Saugleistung damit verringert.

Der Filter 20 ist nach dem Öffnen einer Gehäuseklappe 44 aus der Filteraufnahmekammer 22 entnehmbar. Er kann durch Abnehmen des Abschlussstücks 32 gereinigt werden, indem der darin enthaltene Schmutz oder Staub entnommen wird. Dabei kann auch das Filtermaterial 24 entnommen und gegen ein neues ausgetauscht werden.

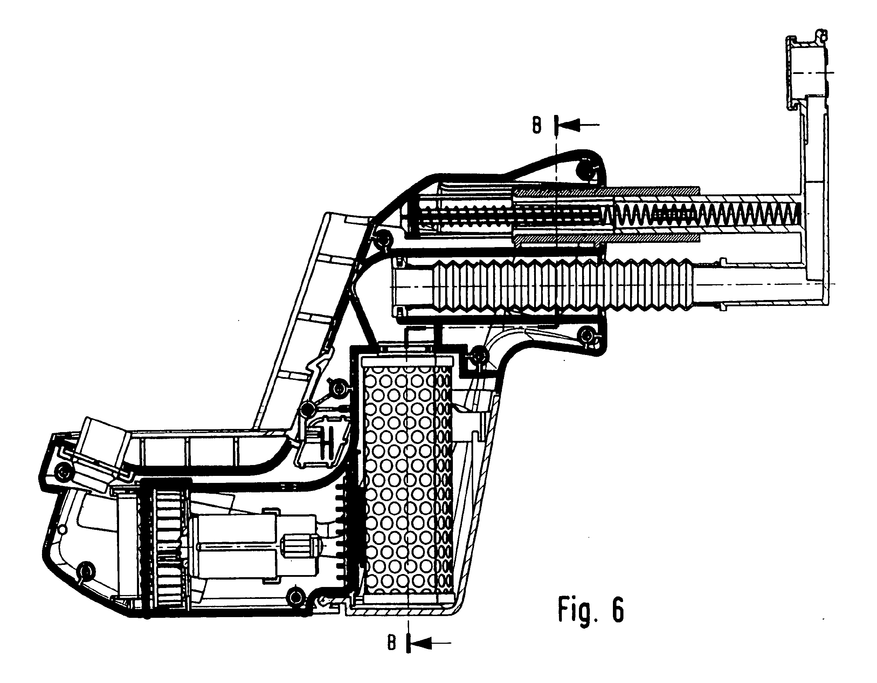

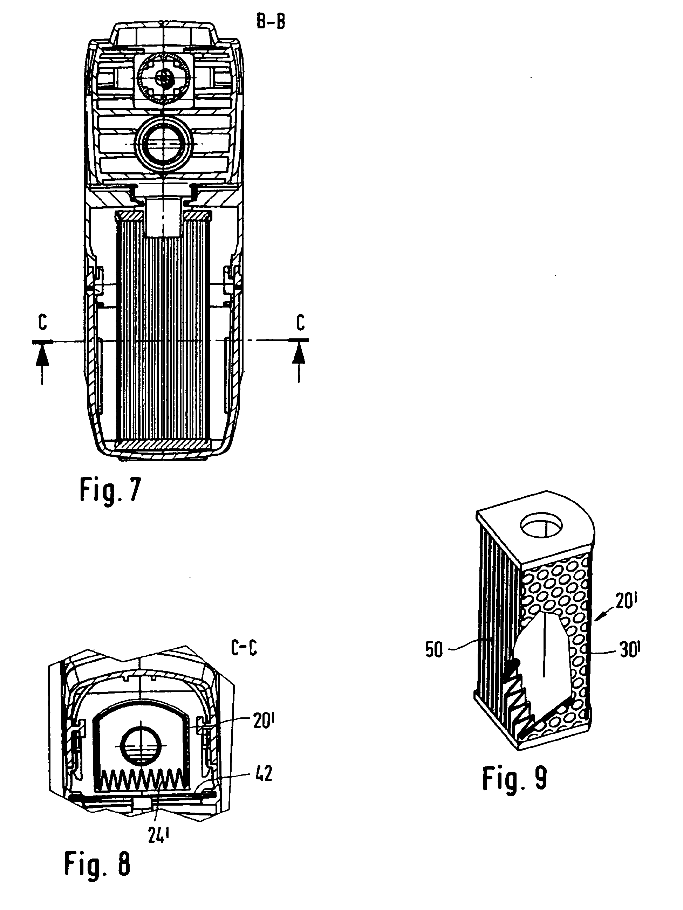

Die Figuren 6 bis 9 zeigen eine weitere Ausführungsform der erfindungsgemäßen Staubabsaugeinrichtung, bei der der Filter 20' nicht mit einer zylindrischen, sondern mit einer eher quaderförmigen Grundform ausgebildet ist. Die Ummantelung 30' erstreckt sich in Umfangsrichtung nicht durchgehend, sondern sie endet, wie aus Figur 9 ersichtlich ist, so dass eine Seite 50 des Filters 20' nicht von der Ummantelung 30' abgedeckt ist. In diesem Bereich ist das Filtermaterial 24', wie aus Figur 8 ersichtlich ist, leporelloförmig gefaltet. Im Bereich der anderen drei Seiten liegt es hingegen von innen eben gegen die Ummantelung 30' an. Durch die leporelloförmige Faltung des Filtermaterials 24' wird eine hinreichende Steifigkeit des Filtermaterials erzeugt, um ein Ansaugen gegen Ansaugöffnungen 42 zu verhindern.

## Patentansprüche

1. Staubabsaugeinrichtung (2) zur lösbaren Anbringung an einem motorischen Handwerkzeuggerät, mit einem einen Ankopplungsbereich (6) an das Handwerkzeuggerät aufweisenden Gehäusekörper (4), mit einer Gebläseeinrichtung (12), mit einer Staubführungseinrichtung (16), um Staub in einem Saugluftstrom von einer Werkzeugansetzstelle (14) zu einer Staubsammeleinrichtung (18) mit einem Filter (20) zu führen, wobei der Saugluftstrom durch die Staubsammeleinrichtung (18) hindurch zu dem Gebläse (12) gesogen wird, wobei der Filter (20) einen Filterinnenraum (28) bildet und die Staubführungseinrichtung (16) in diesen Filterinnenraum (28) mündet und wobei der Filter (20) in einer Filteraufnahmekammer (22) des Gehäusekörpers (4) angeordnet und in die Filteraufnahmekammer (22) einsetzbar bzw. aus dieser entnehmbar ist und der Filter (20) eine im wesentlichen starre Ummantelung (30) mit einem freien Strömungsquerschnitt von wenigstens 20 % aufweist, **dadurch gekennzeichnet, dass** der Filterinnenraum (28) in einer Umfangsrichtung allseits von penetrierbaren Wandungen (26) begrenzt ist und dass zwischen den penetrierbaren Wandungen (26) aus Filtermaterial des Filters (20) und die Filteraufnahmekammer (22) begrenzenden Wandungen (40) des Gehäusekörpers (4) ein freier Strömungsquerschnitt (39) außerhalb des Filters (20) und auch außerhalb der Ummantelung (30) des Filters (20) gebildet ist.

2. Staubabsaugeinrichtung (2) nach Anspruch 1, **dadurch gekennzeichnet, dass** der Abstand zwischen penetrierbaren Wandungen (26) des Filters (20) und die Filteraufnahmekammer (22) begrenzenden Wandungen (26) des Gehäusekörpers (4) wenigstens 1 mm, insbesondere wenigstens 2 mm beträgt.

3. Staubabsaugeinrichtung (2) nach Anspruch 1 oder 2, **dadurch gekennzeichnet, dass** der Filter (20) ein leporelloförmig gefaltetes Filtermaterial (24) als Faltenfiltermittel umfasst.

4. Staubabsaugeinrichtung (2) nach einem der vorstehenden Ansprüche, **dadurch gekennzeichnet, dass** der Filter (20) eine zylindrische Grundform aufweist, wobei die Mantelfläche die penetrierbare Filterwandung (26) bildet.

5. Staubabsaugeinrichtung (2) nach einem der vorstehenden Ansprüche 1-3, **dadurch gekennzeichnet, dass** der Filter (20) eine quaderförmige Grundform aufweist, wobei die langgestreckten Seiten die penetrierbare Filterwandung (26) bilden.

6. Staubabsaugeinrichtung (2) nach einem der vorstehenden Ansprüche, **dadurch gekennzeichnet, dass** der Filter (20) die im wesentlichen starre Ummantelung (30) mit einem freien Strömungsquerschnitt von wenigstens 30 % und vorzugsweise von wenigstens 50 % umfasst.

7. Staubabsaugeinrichtung (2) nach Anspruch 6, **dadurch gekennzeichnet, dass** die Ummantelung (30) von einem Gitter oder Drahtgeflecht oder einem Lochblech gebildet ist.

8. Staubabsaugeinrichtung (2) nach Anspruch 6 oder 7, **dadurch gekennzeichnet, dass** die Ummantelung (30) mit zwei gegenüberliegenden Abschlusstücken (32, 34) montiert ist.

9. Staubabsaugeinrichtung (2) nach Anspruch 6, 7 oder 8, **dadurch gekennzeichnet, dass** die Staubführungseinrichtung (16) durch ein Abschlussstück (32) in das Filterinnere (28) mündet.

10. Staubabsaugeinrichtung (2) nach einem der Ansprüche 6 - 9 **dadurch gekennzeichnet, dass** lösbare Abschlussstücke (32, 34) vorgesehen sind.

11. Staubabsaugeinrichtung (2) nach einem der Ansprüche 6 - 10, **dadurch gekennzeichnet, dass** die aus Filtermaterial (24), Ummantelung (30) und gegebenenfalls Abschlussstücken (32, 34) gebildete Baugruppe aus der Filteraufnahmekammer (22) entnehmbar ist.

## Claims

1. Dust suction device (2) for detachable application to a hand-held power tool, comprising a housing (4) with a coupling region (6) for coupling to the hand-held power tool, a fan (12), and a dust guiding device (16) for guiding dust in a vacuum flow from a tool placement position (14) to a dust collection device (18) with a filter (20), the vacuum flow being sucked through the dust collection device (18), through to the fan (12), the filter (20) forming a filter interior (28) and the dust guiding device (16) opening into said filter interior (28), the filter (20) being arranged in a filter holding chamber (22) of the housing (4) and being able to be inserted into or removed from said filter holding chamber (22), and the filter (20) having a substantially rigid casing (30) with a free flow cross-section of at least 20 %, **characterised in that** the filter interior (28) is delimited on all sides in a peripheral direction by permeable walls (26) and **in that**, between the filter-material permeable walls (26) of the filter (20) and the walls (40) of the housing (4) which delimit the filter holding chamber (22), a conduit (39) is formed outside the filter (20) and also outside the casing (30) of the filter (20).

2. Dust suction device (2) according to claim 1, **characterised in that** the distance between the permeable walls (26) of the filter (20) and the walls (26) of the housing (4) which delimit the filter holding chamber (22) is at least 1mm, in particular at least 2mm.

3. Dust suction device (2) according to either claim 1 or claim 2, **characterised in that** the filter (20) comprises a filter material (24), folded in a zigzag shape, as a fluted-filter means.

4. Dust suction device (2) according to any one of the preceding claims, **characterised in that** the filter (20) has a cylindrical basic shape, the surface forming the permeable filter walls (26).

5. Dust suction device (2) according to any one of claims 1 to 3 above, **characterised in that** the filter (20) has a cuboid basic shape, the longitudinal sides forming the permeable filter wall (26).

6. Dust suction device (2) according to any one of the preceding claims, **characterised in that** the filter (20) comprises the substantially rigid casing (30) with a free flow cross-section of at least 30 % and preferably 50 %.

7. Dust suction device (2) according to claim 6, **characterised in that** the casing (30) is formed by a grating or wire mesh or a perforated plate.

8. Dust suction device (2) according to either claim 6 or claim 7, **characterised in that** the casing (30) is provided with two mutually opposed end caps (32, 34).

9. Dust suction device (2) according to claim 6, claim 7 or claim 8, **characterised in that** the dust guiding device (16) opens into the filter interior (28) through an end piece (32).

10. Dust suction device (2) according to any one of claims 6 to 9, **characterised in that** detachable end pieces (32, 34) are provided.

11. Dust suction device (2) according to any one of claims 6 to 10, **characterised in that** the assembly formed of filter material (24), casing (30), and optionally end pieces (32, 34) can be removed from the filter holding chamber (22).

## Revendications

1. Dispositif d'aspiration de poussière (2) destiné à être placé de façon amovible sur un appareil-outil à un moteur, comprenant un corps de boîtier (4) présentant une zone de rattachement (6) à l'appareil-outil, un dispositif de soufflerie (12), un dispositif de guidage de poussière (16), afin de guider la poussière dans un flux d'air aspiré depuis un emplacement d'outil (14) vers un dispositif de collecte de poussière (18) avec un filtre (20), le flux d'air aspiré étant aspiré à travers le dispositif de collecte de poussière (18) vers la soufflerie (12), le filtre (20) formant un espace intérieur de filtre (28) et le dispositif de guidage de poussière (16) débouchant dans cet espace intérieur de filtre (28) et le filtre (20) étant disposé dans une chambre de logement de filtre (22) du corps de boîtier (4) et pouvant être inséré dans la chambre de logement de filtre (22) et pouvant être enlevé de celle-ci et le filtre (20) présentant une enveloppe (30) sensiblement rigide avec une section d'écoulement libre d'au moins 20 %, **caractérisé en ce que** l'espace intérieur de filtre (28) est limité dans une direction périphérique de tous côtés par des parois (26) pénétrables et **en ce que** entre les parois (26) pénétrables à base de matériau filtrant du filtre (20) et des parois (40), délimitant la chambre de logement de filtre (22), du corps de boîtier (4) est formée une section d'écoulement (39) libre à l'extérieur du filtre (20) et également à l'extérieur de l'enveloppe (30) du filtre (20).

2. Dispositif d'aspiration de poussière (2) selon la revendication 1, **caractérisé en ce que** la distance entre des parois (26) pénétrables du filtre (20) et des parois (26), délimitant la chambre de logement de filtre (22), du corps de boîtier (4) est d'au moins 1 mm, en particulier d'au moins 2 mm.

3. Dispositif d'aspiration de poussière (2) selon la revendication 1 ou 2, **caractérisé en ce que** le filtre (20) comporte un matériau filtrant (24) configuré en forme d'accordéon comme moyen de filtre à pli.

4. Dispositif d'aspiration de poussière (2) selon l'une quelconque des revendications précédentes, **caractérisé en ce que** le filtre (20) présente une forme de base cylindrique, la surface d'enveloppe formant la paroi de filtre (26) pénétrable.

5. Dispositif d'aspiration de poussière (2) selon l'une quelconque des revendications 1 à 3 précédentes, **caractérisé en ce que** le filtre (20) présente une forme de base parallélépipédique, les côtés étirés en longueur formant la paroi de filtre (26) pénétrable.

6. Dispositif d'aspiration de poussière (2) selon l'une quelconque des revendications précédentes, **caractérisé en ce que** le filtre (20) comporte l'enveloppe (30) sensiblement rigide avec une section d'écoulement libre d'au moins 30 % et de préférence d'au moins 50 %.

7. Dispositif d'aspiration de poussière (2) selon la revendication 6, **caractérisé en ce que** l'enveloppe (30) est formée par une grille ou un treillis en fil métallique ou une tôle perforée.

8. Dispositif d'aspiration de poussière (2) selon la revendication 6 ou 7, **caractérisé en ce que** l'enveloppe (30) est montée avec deux raccords (32, 34) se faisant face.

9. Dispositif d'aspiration de poussière (2) selon la revendication 6, 7 ou 8, **caractérisé en ce que** le dispositif de guidage de poussière (16) débouche par un raccord (32) à l'intérieur du filtre (28).

10. Dispositif d'aspiration de poussière (2) selon l'une quelconque des revendications 6 à 9, **caractérisé en ce que** des raccords (32, 34) amovibles sont prévus.

11. Dispositif d'aspiration de poussière (2) selon l'une quelconque des revendications 6 à 10, **caractérisé en ce que** l'ensemble formé du matériau filtrant (24), de l'enveloppe (30) et éventuellement des raccords (32, 34) peut être enlevé de la chambre de logement de filtre (22).
